(19) **Europäisches Patentamt European Patent Office Office européen des brevets**

(11) **EP 2 257 876 B1**

(12) **FASCICULE DE BREVET EUROPEEN**

(45) Date de publication et mention
de la délivrance du brevet:
**10.08.2011 Bulletin 2011/32**

(51) Int Cl.:
***G06F 9/345*** *(2006.01)* ***G06F 15/78*** *(2006.01)*
***G06F 12/08*** *(2006.01)*

(21) Numéro de dépôt: **09708613.6**

(22) Date de dépôt: **06.02.2009**

(86) Numéro de dépôt international:
**PCT/EP2009/051409**

(87) Numéro de publication internationale:
**WO 2009/098311 (13.08.2009 Gazette 2009/33)**

(54) **METHODE DE PRECHARGEMENT DANS UNE HIERARCHIE DE MEMOIRES DES CONFIGURATIONS D'UN SYSTEME HETEROGENE RECONFIGURABLE DE TRAITEMENT DE L'INFORMATION**

VERFAHREN ZUM VORLADEN VON KONFIGURATIONEN EINES UMKONFIGURIERBAREN HETEROGENEN SYSTEMS ZUR INFORMATIONSVERARBEITUNG IN EINE SPEICHERHIERARCHIE

METHOD FOR PRELOADING CONFIGURATIONS OF A RECONFIGURABLE HETEROGENEOUS SYSTEM FOR INFORMATION PROCESSING INTO A MEMORY HIERARCHY

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **08.02.2008 FR 0800677**

(43) Date de publication de la demande:
**08.12.2010 Bulletin 2010/49**

(73) Titulaire: **Commissariat à l'Énergie Atomique et aux Énergies Alternatives
75015 Paris (FR)**

(72) Inventeurs:
• **GUYETANT, Stéphane
F-92350 Le Plessis Robinson (FR)**
• **CHEVOBBE, Stéphane
F-92340 Bourg la Reine (FR)**

(74) Mandataire: **Lucas, Laurent Jacques
Marks & Clerk France
Conseils en Propriété Industrielle
Immeuble " Visium "
22, avenue Aristide Briand
94117 Arcueil Cedex (FR)**

(56) Documents cités:
**WO-A-2004/003738      US-A1- 2004 177 244
US-A1- 2004 260 884      US-A1- 2005 086 029**

**Description**

La présente invention concerne une méthode de préchargement en mémoire des configurations d'un système reconfigurable de traitement de l'information comportant plusieurs unités de traitement de types différents. Une configuration regroupe tout type d'informations nécessaire à la préparation d'une architecture numérique pour l'exécution d'un traitement. La présente invention s'applique par exemple dans le domaine de la microélectronique ou dans le domaine des systèmes électroniques embarqués à forte puissance de calcul.

Une architecture reconfigurable est une structure de traitement de l'information pouvant comporter par exemple plusieurs unités matérielles de traitement, également appelées « coeurs de traitement », dont les éléments constitutifs et leur organisation peuvent être adaptée afin de réaliser efficacement un traitement particulier. Une telle architecture exploite un circuit reconfigurable de traitement de l'information. Le circuit reconfigurable peut être par exemple à gros grain, du type des architectures « eXtreme Processing Platform » produites par la société PACT par exemple. Un circuit reconfigurable à gros grain comporte des unités de traitement permettant des opérations complexes comme une multiplication arithmétique par exemple. Le circuit reconfigurable peut également être un circuit à grains fins, comme un FPGA, acronyme anglo-saxon de « Field Programmable Gate Array ». Un circuit reconfigurable de grain fin comporte des unités de traitement permettant des opérations logiques, par exemple « ou » ou « et ».

Plusieurs mode de reconfiguration existent. Une architecture reconfigurable peut être reconfigurée complètement d'une seule fois, ou alors partiellement et ainsi permettre de réaliser efficacement une partie de l'application. Elle peut également être reconfigurée dynamiquement en cours de traitement, c'est-à-dire disposer d'un mécanisme qui lui permet de modifier sa configuration alors que le traitement n'est pas terminé. Dans certains cas, plusieurs reconfigurations peuvent être nécessaires pour réaliser l'application complète. Un problème de mise en oeuvre de la reconfiguration dynamique est la récupération et le transfert des informations de configuration lors du passage d'une configuration à une autre, notamment à cause du surcoût temporel induit. L'ensemble formé par ces informations peut avoir une structure et un contenu extrêmement variable. Les architectures reconfigurables dynamiques souffrent de la latence de reconfiguration qui ralentit l'exécution d'une application à cause du chargement en mémoire des données de configuration préalable à l'exécution d'un traitement. Il s'agit là de l'un des problèmes techniques que la présente invention se propose de résoudre.

Les systèmes sur puce, couramment regroupés sous l'acronyme anglo-saxon « SoC » signifiant « System-on-Chip », permettent l'intégration sur une seule puce de plusieurs éléments de calcul relativement complexes. Les SoC peuvent ainsi comporter plusieurs coeurs reconfigurables, éventuellement de granularités différentes. Une telle architecture est dite « hétérogène » quand les formats de programmation des éléments de calcul ne sont pas compatibles entre eux. Les formats de programmation reconnus par les différents types d'élément de calcul peuvent appartenir à diverses catégories : ils peuvent permettre de réaliser des programmes itératifs sous la forme de flots d'instructions ou sous la forme de configurations décrivant l'organisation matérielle des unités de traitement ou encore sous des formes mixtes. Des logiciels différents doivent alors être utilisés pour préparer les formats en question, plusieurs compilateurs par exemple. Ainsi, les architectures reconfigurables dynamiques hétérogènes n'ont pas de modèle de programmation propre. Il s'agit là encore de l'un des problèmes techniques que la présente invention se propose de résoudre.

Il existe des solutions qui s'appuient sur des services fournis par le système d'exploitation. Ces services sont cependant limités en complexité car ils sont implémentés sous la forme de pilotes logiciels qui ralentissent l'ordonnanceur ou qui impliquent le non-respect des contraintes temps-réel. D'autres solutions utilisent un gestionnaire de reconfiguration, mais elles sont plutôt adaptées aux architectures multi-coeurs homogènes. Enfin, il existe des outils qui analysent hors ligne, c'est-à-dire avant l'exécution ou « offline » selon la terminologie anglo-saxonne, le comportement des applications en fonction d'une dynamique des entrées. Ils en déduisent un ordonnancement fixe des traitements à effectuer et donc un ordre de chargement opportun. Ces solutions ne tiennent pas compte des aléas inhérents à l'exécution, aléas qui rendent souvent inefficaces toutes les stratégies de préchargement statiques prédéfinies. Après analyse, il apparaît que l'art antérieur cité ci-dessus propose essentiellement trois techniques de base pour diminuer ou masquer les latences de reconfiguration. Ces techniques sont décorrélées de l'aspect statique ou dynamique de la prise de décision. La première technique consiste à compresser et décompresser les flots de bits représentant les informations de configuration, couramment appelés « bitstreams » selon l'expression anglo-saxonne. En effet, à chaque configuration correspond un bitstream qui décrit la configuration, le bitstream devant être transféré pour charger la configuration correspondante. La deuxième technique consiste à précharger des bitstreams en mémoire cache. La troisième technique consiste à réutiliser les configurations déjà exécutées en stockant le bitstream correspondant en mémoire cache. Mais aucune de ces techniques ne fournit une amélioration réellement significative et les architectures reconfigurables dynamiques continuent à souffrir de latences de reconfiguration

La demande de brevet américain US 2004/0260884 A1 divulgue un système reconfigurable comportant plusieurs processeurs reconfigurables, l'un des processeurs comportant une unité de préchargement permettant de lire et d'écrire des données dans une mémoire partagée. Cependant, cette demande de brevet ne divulgue pas de précharger les bitstreams représentant les informations de configuration du système.

L'invention a notamment pour but d'améliorer les performances de calcul des architectures reconfigurables dynamiquement en masquant les latences de reconfiguration, c'est-à-dire en préparant judicieusement les reconfigurations à venir pendant que les coeurs de calcul continuent d'exécuter leurs traitements principaux. Pour cela, l'invention propose notamment de précharger les bitstreams de configuration en mémoire de manière prédictive. C'est pourquoi, par la suite, un dispositif selon l'invention pourra être désigné par l'acronyme anglo-saxon « PCM » signifiant « Predictive Configuration Manager ». A cet effet, l'invention a pour objet une méthode de préchargement dans une hiérarchie de mémoires des flots de bits représentant les informations de configuration d'un système reconfigurable de traitement de l'information comportant plusieurs unités de traitement de types différents, une configuration décrivant une organisation logique possible des unités de traitement adaptée à l'exécution d'une tâche donnée. La méthode comporte une étape, hors exécution, de détermination des tâches pouvant être exécutées sur une unité de traitement d'un type donné subséquemment à l'exécution de la tâche donnée. Elle comporte également une étape, en cours d'exécution de la tâche donnée, de calcul, pour chacune des tâches pouvant être exécutées, d'une priorité dépendant d'informations relatives à l'exécution courante de la tâche donnée. Elle comporte également une étape, en cours d'exécution de la tâche donnée, de tri des tâches pouvant être exécutées dans l'ordre de leurs priorités. Elle comporte aussi une étape, en cours d'exécution de la tâche donnée, de préchargement dans la hiérarchie de mémoires des flots de bits représentant les informations des configurations utiles à l'exécution des tâches pouvant être exécutées, en privilégiant les tâches dont la priorité est la plus élevée.

Avanatgeusement, le préchargement des configurations peut être interrompu sur émission par un système d'exploitation d'une requête de chargement dans une mémoire, ladite requête de chargement étant traitée en premier, de sorte que la méthode de préchargement ne ralentit pas le fonctionnement du système. La mémoire peut être une mémoire hiérarchique.

Par exemple, pour chaque type d'unité de traitement, un graphe de dépendance peut être construit, le graphe indiquant les tâches pouvant être exécutées sur une unité de traitement du type donné subséquemment à l'exécution de la tâche donnée.

Avantageusement, le graphe de dépendance peut être construit en utilisant, pour chaque tâche pouvant être exécutée sur une unité de traitement du type donné subséquemment à l'exécution de la tâche donnée, un graphe descriptif de processus applicatif.

Par exemple, la priorité d'une tâche pouvant être exécutée peut être une somme pondérée de N paramètres $p_i$, $i \, \varepsilon \, \{1,..,N\}$ où N est un entier non nul, chaque

paramètre $p_i$ dans la somme pouvant être élevé à une puissance $n_i$ où $n_i$ est un entier non nul, des paramètres $p_i$ pouvant être fournis dynamiquement par un système d'exploitation pendant l'exécution. Des paramètres $p_i$ peuvent également être fournis statiquement avant l'exécution.

La priorité d'une tâche pouvant être exécutée peut dépendre de priorités de processus fournies par un système d'exploitation. Elle peut également dépendre de la charge relative de calcul des unités de traitement du type donné. Elle peut aussi dépendre de la durée moyenne d'exécution sur les unités de traitement du type donné. Elle peut dépendre des probabilités d'exécuter les instructions conditionnelles dans la tâche donnée.

Avantageusement, les configurations peuvent être préchargées dans la hiérarchie de mémoires par blocs de bits de taille paramétrable.

La méthode peut être implémentée sous la forme d'un module matériel, le système reconfigurable étant un système sur puce. Le module matériel peut alors comporter une mémoire cache.

Outre le fait qu'elle permet de réaliser des choix pertinents de préchargement, l'invention a pour principaux avantages que les informations qu'elle génère dynamiquement lui permettent également de collaborer avec l'ordonnanceur pour lui fournir une valeur précise du temps nécessaire pour charger une configuration sur un coeur de calcul. L'ordonnanceur peut intégrer ce temps de configuration dans le temps d'exécution d'une tâche. En fonctionnement nominal, cette valeur doit idéalement être nulle. Il faut noter que la présente invention n'augmente pas le temps global nécessaire au calcul d'un ordonnancement. Par ailleurs, l'invention a encore pour principaux avantages qu'elle masque l'hétérogénéité de l'architecture à l'ordonnanceur en lui offrant une interface de configuration unifiée et en réalisant elle-même l'allocation des tâches sur les ressources de calcul disponibles dans l'architecture en cours d'exécution. Le programme d'exécution n'a donc pas connaissance de l'hétérogénéité, l'invention prenant en charge une partie du contrôle des coeurs de calcul.

D'autres caractéristiques et avantages de l'invention apparaîtront à l'aide de la description qui suit, faite en regard de dessins annexés qui représentent :

- la figure 1, une illustration par un diagramme d'un exemple d'architecture reconfigurable hétérogène dont les latences de reconfiguration peuvent être masquées par un dispositif selon l'invention ;
- la figure 2, une illustration par un diagramme d'un exemple d'architecture fonctionnelle d'un dispositif selon l'invention ;
- la figure 3, une illustration par un diagramme fonctionnel d'un exemple de chaîne de traitement selon l'invention ;
- la figure 4, une illustration par des graphes de dépendance de tâches du principe de l'allocation des tâches à la conception de l'application et de la dérivation d'un graphe de dépendance de configuration extrait pour des coeurs homogènes selon l'invention ;

- la figure 5, une illustration d'un exemple de structure de données permettant de représenter un graphe de dépendance de configuration selon l'invention ;
- la figure 6, une illustration d'un exemple de structure de données permettant de représenter une tâche fille selon l'invention ;
- la figure 7, une illustration d'un exemple de structure de données permettant de représenter un identifiant de configuration selon l'invention ;
- la figure 8, une illustration d'un exemple de structure de données permettant de représenter un descripteur de configuration selon l'invention ;
- la figure 9, une illustration d'un exemple de structure de données permettant de représenter une ligne d'index mémoire selon l'invention.

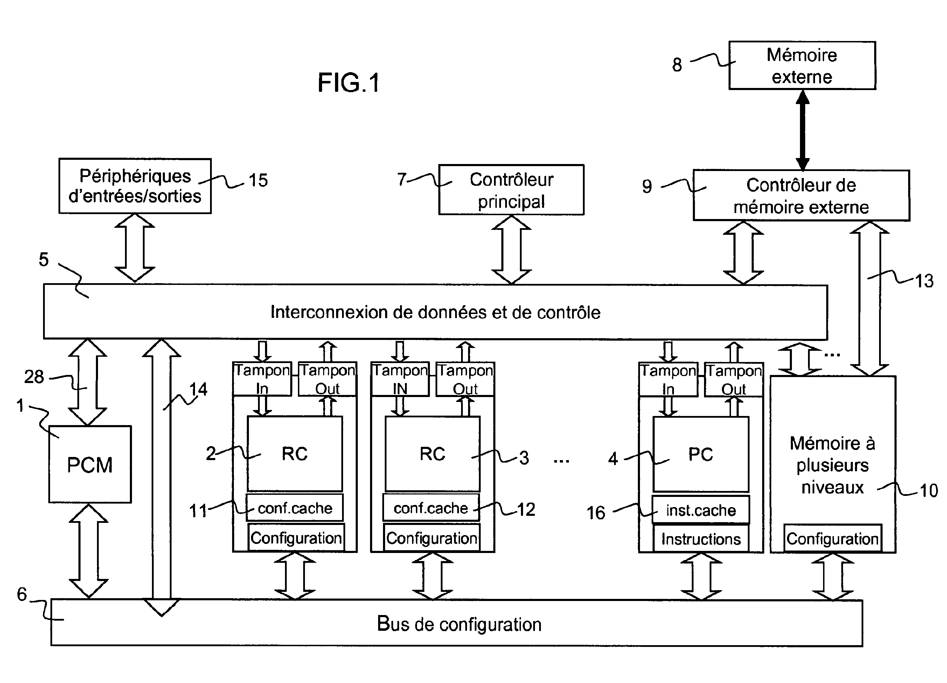

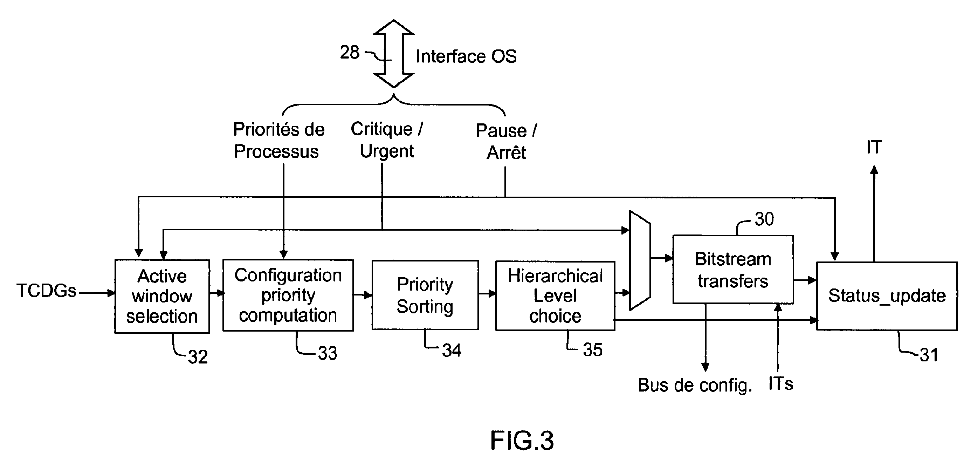

La figure 1 illustre par un diagramme d'architecture un exemple typique d'organisation d'un SoC pour lequel l'invention apporte une amélioration de performance. Le dispositif selon l'invention est représenté par un composant PCM 1. Avantageusement, le composant PCM 1 selon l'invention peut être un composant matériel du type circuit reconfigurable intégré dans une architecture de type SoC reconfigurable. Le composant PCM 1 comporte une interface 28 avec un système d'exploitation, l'acronyme anglo-saxon « OS » signifiant « Operating System ». L'interface 28 est détaillée à la figure 3. Un ensemble de coeurs de calcul peut être interconnecté d'une part par un réseau 5 d'interconnexion de données et de contrôle d'exécution, et d'autre part par un bus 6 de configuration. Des périphériques d'entrée/sortie 15 sont connectés au réseau 5. Ce schéma d'interconnection n'est pas limitatif, parce que la configuration peut également se faire sur un réseau d'interconnection unique, non dédié : par exemple, si un pont 14 devient une continuité de l'interconnection. L'ensemble des coeurs de calcul comporte par exemple des coeurs reconfigurables 2 et 3, notés « RC » pour « Reconfigurable Core », ainsi que des coeurs de calcul programmables comme le coeur 4 noté « PC » pour « Programmable Core ». L'architecture ainsi constituée est hétérogène : les formats de programmation des coeurs RC 2 et RC 3 sous la forme de configurations ne sont pas forcément compatibles entre eux, ni avec le format de programmation du coeur PC 4 sous la forme de flots d'instructions. L'exemple d'architecture reconfigurable dynamique hétérogène de la figure 1 n'a donc pas de modèle de programmation propre.

Un contrôleur principal 7 peut être implémenté sous forme de composants spécialisés, du type d'un « Operating System accelerator on Chip » conformément à la publication de Nicolas Ventroux « Contrôle en ligne des systèmes multiprocesseurs hétérogènes embarqués : élaboration et validation d'une architecture », ou plus classiquement avec un microprocesseur programmable comme dans l'exemple de la figure 1. Par exemple, le contrôleur 7 peut être en charge d'un système d'exploitation temps réel. Dans une variante de réalisation, le composant matériel PCM 1 selon l'invention pourrait être remplacé par un composant logiciel offrant les mêmes services. Le composant logiciel pourrait alors être exécuté sur le contrôleur 7, par exemple sous la forme d'un pilote du système d'exploitation. Une interconnexion dédiée 13 permet d'accélérer le rapatriement des configurations depuis des contrôleurs de mémoires extérieures 9 et donc depuis des mémoires de masse extérieures 8, afin de les transférer par exemple vers une mémoire 10 comportant une hiérarchie à plusieurs niveaux de mémoires internes. Certains niveaux de la mémoire 10 peuvent être alloués aux services de gestion des configurations du composant PCM 1 selon l'invention. Par la suite, ces niveaux de la mémoire 10 seront appelés « mémoire locale de configuration ». Pour chaque coeur de calcul 2, 3 et 4, une mémoire, respectivement 11, 12 et 16, est un cache de configuration dédié à ce coeur. Des coeurs homogènes peuvent partager le même cache ou avoir plusieurs caches dédiés. L'ensemble des mémoires extérieures, des mémoires 10 composant le système, des mémoires cache 11, 12 et 16, ainsi que des plans mémoires de configuration constitutifs des coeurs reconfigurables est appelé hiérarchie de mémoire de configuration, sans qu'il soit nécessaire que tous ces niveaux soient représentés dans l'architecture. Le composant PCM 1 selon l'invention peut copier des configurations entières ou par morceaux entre les différents niveaux de la hiérarchie de mémoires de configuration. Pour faciliter la gestion des configurations rapatriées, celles-ci peuvent être découpées en blocs mémoires dont la taille est paramétrable et peut varier de quelques centaines de bits ou d'octets jusqu'à plusieurs kilo-bits ou kilo-octets. Le composant PCM 1 peut commander la copie de blocs dans les différentes mémoires de configuration 10, 11, 12 selon la méthode décrite ci-après.

Comme énoncé précédemment, le composant PCM 1 selon l'invention permet de précharger les bitstreams de configuration en mémoire de manière prédictive. Les prédictions s'appuient notamment sur des informations dynamiques générées en cours d'exécution. Les informations dynamiques peuvent être communiquées par d'autres contrôleurs du circuit, comme par exemple les priorités de processus fournies par le microprocesseur 7 jouant le rôle d'ordonnanceur. Dans un dispositif embarqué, la charge restant dans la batterie pourrait être une de ces informations dynamiques. Des commandes introduites via une interface homme-machine pourraient également faire partie de ces informations dynamiques. Le composant PCM 1 lui-même peut également générer des informations dynamiques, comme par exemple la charge relative de calcul de chaque type de coeur RC ou PC, ou encore la durée moyenne d'exécution sur chaque type de coeur RC ou PC. Le composant PCM 1 peut également compléter dynamiquement les informations statiques fournies par les outils de « profiling », notamment les probabilités d'exécuter les instructions conditionnelles. Les informations dynamiques générées ou complétées par le composant PCM 1 confèrent à l'architecture une propriété d'auto-adaptation par rapport aux conditions d'exécution. Les prédictions s'appuient également sur des informations purement statiques : les dépendances entre les configurations. Les réalisations de ces dépendances peuvent éventuellement être déduites de l'enchaînement des appels pendant l'exécution. Ainsi, il est possible de prédire que si une configuration donnée doit être chargée, alors une autre configuration devra nécessairement être chargée par la suite. L'anticipation des appels permet d'améliorer la réactivité de l'architecture aux commandes d'exécution en rapatriant les configurations au moment opportun.

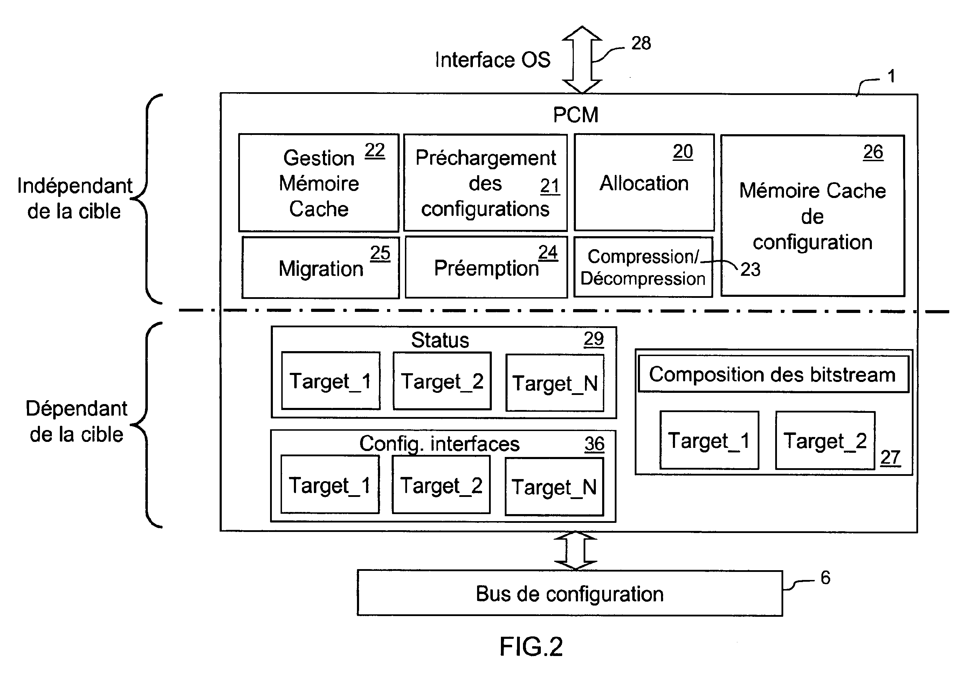

La figure 2 illustre par un diagramme un exemple d'architecture fonctionnelle interne du composant PCM 1 selon l'invention, chaque module offrant un service. Il peut comporter un module 20 d'allocation des tâches sur l'ensemble hétérogène de coeurs de calcul formé par les coeurs RC 2, RC 3 et PC 4. Chacun des coeurs de calcul RC 2, RC 3 et PC 4 peut ainsi constituer une cible potentielle notée « Target_1 » à « Target_N » selon la terminologie anglo-saxonne. Certains services fournis par le composant PCM 1 sont dépendants du coeur cible, d'autres ne les sont pas. Concernant les services dépendants du coeur cible, le composant PCM 1 peut comporter une mémoire cache de configuration 26 pour stocker des configurations, un module 21 de préchargement des configurations, un module 22 de mise en mémoire cache des configurations, un module 24 de préemption, un module 25 de migration et un module 23 de compression et de décompression des bitstreams. Concernant les services dépendants du coeur cible, le composant PCM 1 peut comporter un module 27 de manipulation de bitstreams permettant notamment la composition des bitstreams de deux cibles « Target_1 » et « Target_2 », ainsi que la transformation d'empreinte d'une cible à l'autre. Il faut noter que la mémoire cache de configuration 26 pourrait être externe au composant PCM 1, de même que les services dépendants du coeur cible considéré, qui peuvent être déportés au plus près des coeurs de calcul. Le composant PCM 1 comporte également un module 29 qui contient des informations sur l'état des ressources, informations mises à disposition de l'OS, et un module 36 qui gère les spécificités des protocoles de chargement de chaque coeur de calcul.

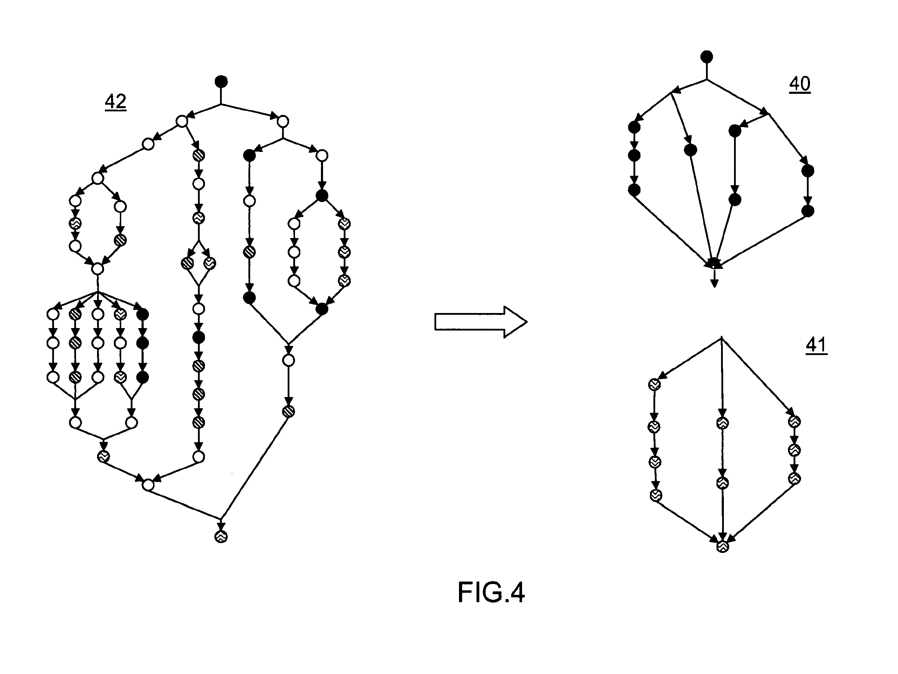

La figure 3 illustre par un diagramme un exemple de chaîne de traitement réalisée par le composant PCM 1 selon l'invention. Cette chaîne permet de combiner, en cours d'exécution, des informations dynamiques fournies par le système d'exploitation avec des informations statiques issues de la conception de l'application. L'interface 28 permet notamment aux modules 20, 21 et 22 de recevoir du système d'exploitation des informations dynamiques comme des priorités de processus représentées par un flux « thread priorities », des requêtes critiques ou urgentes de chargement représentées par un flux « Critical / Urgent », des requêtes de pause ou de fin dans l'exécution d'une tâche représentées par un flux « Pause / End ». En plus, les modules 20, 21 et 22 peuvent utiliser des informations purement statiques que sont les graphes descriptifs de processus applicatifs. Il peut s'agir d'un graphe de dépendance des configurations, graphe communément désigné par l'acronyme anglo-saxon « CDG » signifiant « Configuration Dependency Graph ». De manière équivalente, les modules 20, 21 et 22 peuvent aussi utiliser un graphe de dépendance de contrôle et de données, communément désigné par l'acronyme anglo-saxon « CDFG » signifiant « Control-Data Flow Graph ». Ces graphes permettent de déterminer des manières plus rapides de réaliser des tâches de calcul, grâce par exemple à une ou plusieurs implémentations matérielles sur une ou plusieurs cibles éventuellement hétérogènes. Pour chaque graphe fourni par les développeurs et pour chaque type de cible, un graphe appelé « TCDG » selon un acronyme anglo-saxon signifiant « Tile-dependant configuration dependency graph » peut avantageusement être dérivé. Le format du TCDG est propre à la présente invention. La construction du TCDG est détaillée ci-après à la lumière des figures 4 à 9. Puis, la figure 3 sera considérée à nouveau afin de détailler comment le TCDG peut être utilisé selon la présente invention.

La figure 4 illustre, par des graphes de dépendance des tâches, d'une part le principe de l'allocation des tâches effectuée par le développeur à la conception d'une application, et d'autre part la dérivation de deux graphes de dépendance de configuration selon l'invention. A partir d'un graphe de dépendance de tâches 42 de type CCG ou de CDFG fourni par les développeurs de l'application pour chacun des processus de ladite application, ou alors de l'unique processus constituant l'application, deux TCDG 40 et 41 peuvent être dérivés. Pour chaque CDG ou CDFG fourni pour décrire la ou les applications, chaque type de coeur reconfigurable ou programmable présent dans l'architecture ciblée donne lieu à la création d'un TCDG différent. Dans le graphe 42, les tâches noires sont à exécuter préférentiellement sur une cible d'un premier type, les tâches chevronnées sont à exécuter préférentiellement sur une cible d'un second type. Le typage des tâches n'existe pas dans les formats classiques de CCG ou de CDFG. L'invention propose d'ajouter ce typage dans le graphe 42 grâce à une connaissance approfondie des choix d'implémentation faits par les développeurs de l'application. En effet, les développeurs peuvent fournir une priorité dans le choix du type de cible si plusieurs implémentations d'une même tâche logicielle sont possibles. Les TCDG 40 et 41 correspondent aux tâches pouvant être exécutées sur une cible du premier type et sur une cible du second type respectivement.

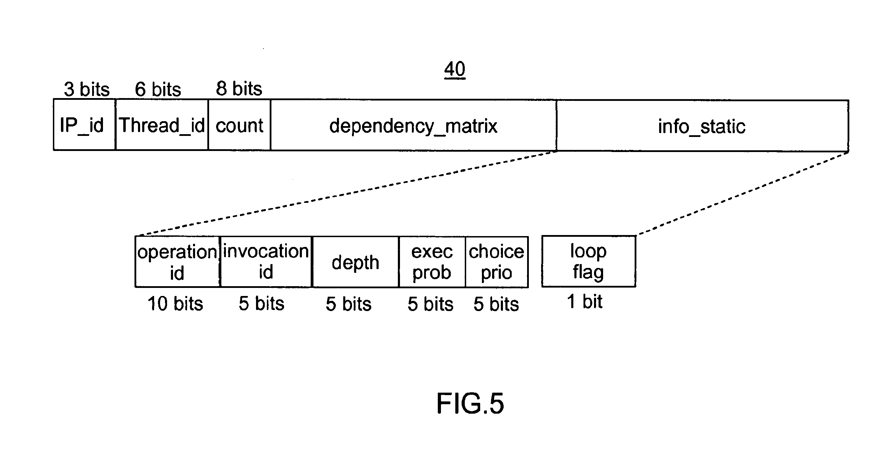

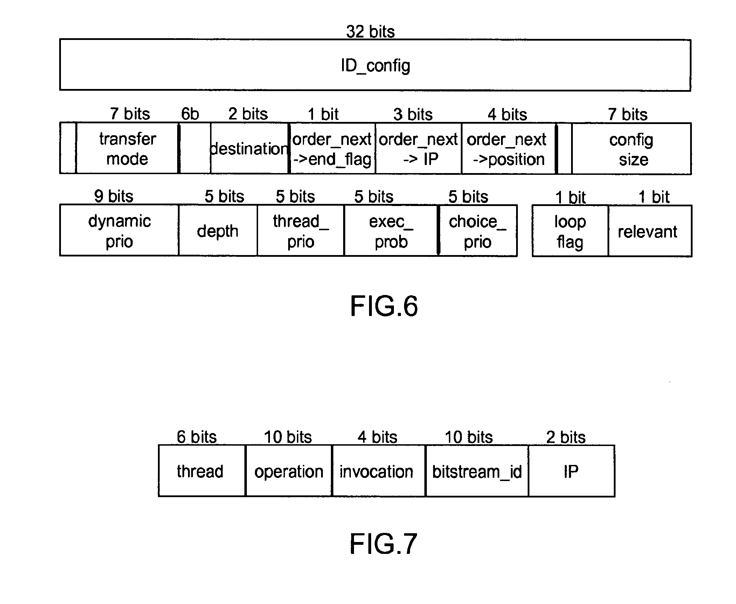

La figure 5 illustre un exemple de structure de données permettant de représenter le TCDG 40 selon l'invention. Les tailles de champ en nombre de bits ne sont données qu'à titre d'exemple et peuvent varier d'une implémentation à une autre. Le TCDG 40 peut être défini de façon unique par un champ « IP_id » contenant un identifiant de cible et un champ « thread_id » contenant un identifiant de processus. Le TCDG 40 peut également comporter un champ « count » contenant un nombre de tâches matérielles et un champ « dependency_matrix » contenant une matrice de dépendance qui décrit les liens entre les noeuds. Le TCDG 40 peut également comporter un champ « info_static » qui contient toutes les informations statiques disponibles au développement de l'application. Dans l'exemple de la figure 5, tous les noeuds du TCDG 40 comportent un champ « info_static ». Le champ « info_static » peut lui-même être composé de plusieurs champs, comme illustré dans l'exemple de la figure 5. Il peut notamment comporter un champ « exec_prob » contenant une probabilité d'exécution fournie par les outils de « profiling ». Il peut également comporter un champ « depth » contenant une profondeur représentative du nombre de noeuds existants dans le graphe original, qui peut être simplifié entre deux noeuds du TCDG. Le champ « depth » permet de différencier entre deux branches dans le TCDG laquelle a le plus de chances d'être exécutée en permier. Il peut aussi comporter un champ « operation_id » contenant un identifiant de tâche logicielle. Il peut comporter un champ « invocation_id » contenant un identifiant d'appel, une même tâche pouvant apparaître plusieurs fois dans le graphe. Il peut comporter un champ « choice_prio » contenant une priorité de choix dans le cas de plusieurs implémentations d'une même tâche logicielle, comme énoncé précédemment. Il peut enfin comporter un champ « loop_flag » contenant un signal de boucle, il est utilisé pour maintenir les bitstreams dans la mémoire cache 26 pendant une boucle. Pendant l'exécution d'une tâche, le composant PCM 1 selon l'invention cherche dans le TCDG 40 les tâches filles susceptibles d'être les suivantes à être appelées sur la cible. Pour cela, les informations du champ « info_static » sont copiées dans une structure de donnée décrite à la figure 6.

La figure 6 illustre un exemple de structure de données permettant de représenter une tâche fille. Les tailles de champ en nombre de bits ne sont données qu'à titre d'exemple et peuvent varier d'une implémentation à une autre. Cette structure de tâche fille peut comporter un champ « iD_config » contenant un identifiant de configuration qui est détaillé à la figure 7. La figure 7 illustre un exemple de structure de données permettant de représenter un identifiant de configuration. Ainsi, le champ « ID_config » peut lui-même comporter un champ « thread » contenant un numéro de processus, un champ « opération » contenant un identifiant de tâche logicielle, un champ « invocation » contenant un numéro d'appel dans le TCDG 40, un champ « bitstream_id » contenant un identifiant de fichier de configuration et un champ « IP » contenant une cible matérielle. Il faut noter que les champs « bitstream_id » et « IP » sont redondants car un bitstream est obligatoirement associé à une cible donnée. La structure de tâche fille de la figure 6 peut également comporter un champ « relevant » contenant un booléen de validité et un champ « loop_flag » contenant un signal de boucle. Elle contient également toutes les informations du champ « info_static » décrites ci-dessus. Elle peut comporter un champ « depth » contenant une profondeur dynamique qui tend vers zéro. Elle peut comporter un champ « thread_prio » contenant une priorité de processus telle que fournie par le système d'exploitation. La structure de tâche fille peut également comporter un champ « config_size » contenant la taille en nombre de blocs du fichier de configuration associé. Elle peut comporter un champ « destination » contenant une mémoire de destination décidée dynamiquement. Elle peut comporter un champ « transfer_mode » contenant un nombre de blocs à copier, ce nombre étant décidé dynamiquement. Elle comporte une priorité dynamique calculée selon l'invention à partir d'informations dynamiques et à partir d'informations statiques. Dans l'exemple de la figure 6, cette priorité dynamique est contenue dans un champ « dynamic_prio ». De nombreuses méthodes peuvent permettre de calculer la priorité dynamique. Par exemple, la priorité dynamique $P_d$ peut être une somme pondérée de N paramètres $p_i$, $i \in \{1,..,N\}$ où N est un entier non nul, chaque paramètre $p_i$ dans la somme étant élevé à une puissance $n_i$ où $n_i$ est un entier non nul :

$$P_d \; \Box \; \sum_{i \Box 1}^{N} a_i p_i^{n_i}$$

Les valeurs de certains paramètres $p_i$ peuvent être fournies dynamiquement par le système d'exploitation en cours d'exécution, les valeurs d'autres paramètres $p_i$ peuvent être fournies statiquement avant l'exécution. Les divers choix possibles de paramètres $p_i$ et de coefficients de pondération $a_i$ constituent autant de politiques possibles pour orienter le choix de la mémoire destination et le nombre de blocs à copier. Ainsi, le composant PCM 1 selon l'invention est adaptable à de nombreux cas particuliers d'applications. Les valeurs de priorité dynamique sont calculées pour trier toutes les structures de tâches filles identifiées à un instant donné, dans l'ordre décroissant par exemple. Trois champs préfixés par « order_next » peuvent servir au chaînage des structures de tâches filles après le tri, des champs « order_next->position » et « order_next->IP » pouvant permettre d'identifier de façon unique le noeud suivant. Un champ « order_next->end_flag » peut signaler que le dernier noeud est atteint. Le composant PCM 1 selon l'invention peut lire la liste triée de structures de tâches filles et peut copier des blocs dans l'ordre du chaînage. Il peut copier des blocs tant que, d'une part, il reste de la mémoire disponible et tant que, d'autre part, de nouveaux ordres de chargement en mémoire ne sont pas envoyés par l'ordonnanceur du système d'exploitation. Au cas où de nouveaux ordres de chargements seraient donnés par l'ordonnanceur, ceux-ci peuvent être traités en priorité haute. L'identification des tâches filles et leur tri peuvent être repris par la suite.

Comme illustré par la figure 3, en couplage avec le système d'exploitation, le composant PCM 1 selon l'invention peut avoir deux modes de fonctionnement. En effet, la chaîne de prédiction selon l'invention peut être activée ou non. Lorsque la chaîne de prédiction n'est pas activée, le système d'exploitation est maître de l'ordonnancement des chargements et des exécutions des traitements. Dans ce cas, le composant PCM selon l'invention est piloté par le système d'exploitation, qui lui envoie des commandes de chargement et de libération des ressources. Lorsque la chaîne de prédiction est activée, le composant PCM selon l'invention suit l'exécution des traitements en fonction des commandes envoyées par le système d'exploitation, tout en ordonnançant lui-même les préchargements.

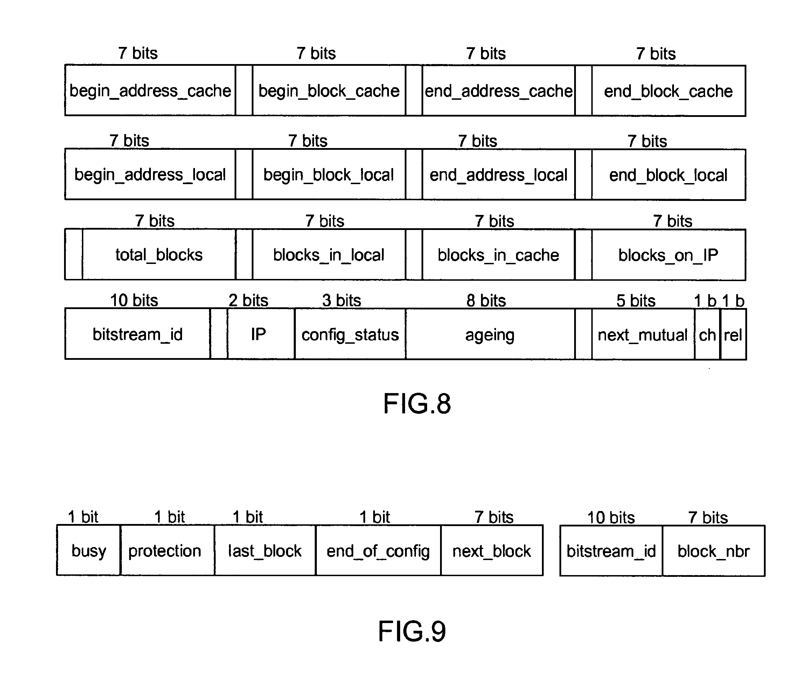

La figure 8 illustre un exemple de structure de données permettant de représenter un descripteur de configuration. Les tailles de champ en nombre de bits ne sont données qu'à titre d'exemple et peuvent varier d'une implémentation à une autre. C'est ce descripteur de configuration qui, lorsqu'il est transformé en flot de bits, peut former un bitstream. Lorsqu'une copie de bitstream est décidée par le composant PCM 1 selon l'invention, que ce soit suite à une commande directe du système d'exploitation ou pour réaliser un préchargement commandé par ses prédictions, le composant PCM 1 peut réserver en mémoire cette structure de descripteur de configuration. Une telle structure peut comporter un champ « rel » contenant un booléen de validité de la structure. Elle peut également comporter un champ « ch » contenant un booléen qui signale si le bitstream peut être exclusif d'un autre, dans le cas d'une divergence en « ou » ou pour des implémentations concurrentes par exemple. Elle peut comporter un champ « next_mutual » contenant un pointeur vers un éventuel descripteur concurrent. Elle peut comporter un champ « ageing » contenant un entier représentant le vieillissement du descripteur et permettant le nettoyage des structures inutilisées. Elle peut comporter un champ « config_status » contenant un entier représentant l'état de configuration, c'est-à-dire indiquant si la configuration est partiellement rapatriée ou si elle est prête à être exécutée. Elle peut comporter des champs « bitstream_id » et « IP » contenant des entiers qui identifient respectivement le bitstream et la cible. Elle peut comporter un champ « blocks_on_IP » contenant un entier qui caractérise le nombre de blocs chargés sur la cible. Elle peut comporter un champ « blocks_in_cache » contenant un entier qui caractérise le nombre de blocs présents en mémoire cache. Elle peut comporter un champ « blocks_in_local » contenant un entier qui caractérise le nombre de blocs présents en mémoire locale. Elle peut comporter un champ « total_blocks » contenant un entier qui caractérise le nombre total de blocs déjà rapatriés, il est la somme des trois champs précédemment cités. Elle peut également comporter des champs « begin_adress_cache » et « begin_adress_local » qui contiennent chacun un entier représentant l'adresse du premier bloc en mémoire cache et en mémoire locale respectivement. Des champs « end_adress_cache » et « end_adress_local » peuvent contenir chacun un entier qui représente l'adresse du dernier bloc en mémoire cache et en mémoire locale respectivement. Des champs « begin_block_cache » et « begin_block_local » peuvent contenir chacun un entier qui représente le numéro du premier bloc en mémoire cache et en mémoire locale respectivement. Des champs « end_block_cache » et « end_block_local » peuvent contenir chacun un entier qui représente le numéro du dernier bloc en mémoire cache et en mémoire locale respectivement. Il faut noter que les blocs chargés dans la mémoire forment une chaîne continue, mais qu'ils sont rangés de façon non contiguë.

La figure 9 illustre un exemple de structure de données permettant de représenter une ligne d'index mémoire. Les tailles de champ en nombre de bits ne sont données qu'à titre d'exemple et peuvent varier d'une implémentation à une autre. En effet, pour faciliter la récupération des blocs et mettre à jour les descripteurs de configuration, une structure de données représentant le contenu indexé des différentes mémoires est utilisée. Une telle structure peut comporter un champ « busy » contenant un booléen de validité. Elle peut également comporter un champ « protection » contenant un booléen qui signale la protection du bloc. Ce champ sert à protéger la configuration dont le bloc fait partie. Une structure de ligne d'index mémoire peut également comporter un champ « last_block » contenant un booléen qui signale la fin d'une chaîne de blocs. Elle peut également comporter un champ « end_of_config » contenant un booléen qui signale si la fin correspond à la fin d'une configuration. Elle peut également comporter un champ « next_block » contenant un pointeur vers le bloc suivant si le bloc courant n'est pas en fin de chaîne. Elle peut comporter un champ « bitstream_id » contenant un entier qui identifie le bitstream. Elle peut enfin comporter un champ « block_nbr » contenant un entier qui représente le numéro de bloc et qui permet d'identifier la position du bloc dans le bitstream. Pour chaque bloc présent en mémoire, une structure de ligne d'index comme celle décrite par la figure 9 peut être créée en mémoire.

Comme illustré par la figure 3, une chaîne de traitements démarre dès réception d'une commande envoyée par le système d'exploitation via l'interface 28.

Sur réception d'une requête de chargement, les blocs manquants du fichier de configuration peuvent être chargés directement par une fonction 30 « bitstream_transfers » qui peut transférer les bitstreams à une fonction 31 « status_update ». A partir de ces bitstreams, la fonction 31 « status_update » peut mettre à jour les structures de données illustrées à la figure 8, qui représentent les descripteurs de configurations.

**EP 2 257 876 B1**

En parallèle, la chaîne de prédiction peut être déclenchée pour réaliser des préchargements selon l'invention. Tout d'abord, une fonction 32 « active_window_ selection» » peut utiliser les TCDG 40 et 41 construits comme explicité précédemment. Ces TCDG permettent de déduire les tâches matérielles susceptibles d'être exécutées. La fonction 32 « active_window_selection » peut rapatrier ces tâches dans des structures de tâche fille illustrées à la figure 6. Puis, une fonction 33 « configuration_priority_computation » peut calculer les priorités dynamiques des tâches sélectionnées. Ensuite, les tâches sélectionnées peuvent être triées par une fonction 34 « priority_sorting », dans l'ordre décroissant de leurs priorités dynamiques par exemple. Enfin, une fonction 35 « hierarchical_level_choice » choisit, en fonction de la place disponible dans les mémoires, les emplacements pour les meilleurs blocs à rapatrier. Avantageusement, le préchargement selon l'invention ne peut s'effectuer que lorsque la fonction 30 « bitstream_ transfers » de transfert et la fonction 31 « status_ update » de mise à jour sont disponibles, c'est-à-dire lorsqu'elles ne traitent pas des requêtes de chargement provenant directement du système d'exploitation. Ainsi, l'invention ne peut jamais ralentir les chargements commandés par le système d'exploitation, même si ses prédictions sont erronées.

## Revendications

**1.** Méthode de préchargement dans une hiérarchie de mémoires (10, 11, 12, 16) des flots de bits représentant les informations de configuration d'un système reconfigurable de traitement de l'information comportant plusieurs unités de traitement de types différents (2, 3, 4), une configuration décrivant une organisation logique possible des unités de traitement adaptée à l'exécution d'une tâche donnée, la méthode étant **caractérisée en ce qu'**elle comporte :

- hors exécution, une étape de détermination des tâches pouvant être exécutées sur une unité de traitement d'un type donné subséquemment à l'exécution de la tâche donnée ;
- en cours d'exécution de la tâche donnée, une étape de calcul, pour chacune des tâches pouvant être exécutées, d'une priorité dépendant d'informations relatives à l'exécution courante de la tâche donnée ;
- en cours d'exécution de la tâche donnée, une étape de tri des tâches pouvant être exécutées dans l'ordre de leurs priorités ;
- en cours d'exécution de la tâche donnée, une étape de préchargement dans la hiérarchie de mémoires des flots de bits représentant les informations des configurations utiles à l'exécution des tâches pouvant être exécutées, en privilégiant les tâches dont la priorité est la plus élevée.

**2.** Méthode selon la revendication 1, **caractérisée en ce que** le préchargement des configurations est interrompu sur émission par un système d'exploitation d'une requête de chargement dans une mémoire (10), ladite requête de chargement étant traitée en premier, de sorte que la méthode de préchargement ne ralentit pas le fonctionnement du système.

**3.** Méthode selon la revendication 1, **caractérisée en ce que**, pour chaque type d'unité de traitement, est construit un graphe de dépendance (TCDG) indiquant les tâches pouvant être exécutées sur une unité de traitement du type donné subséquemment à l'exécution de la tâche donnée.

**4.** Méthode selon la revendication précédente, **caractérisée en ce que** le graphe de dépendance (TCDG) est construit en utilisant, pour chaque tâche pouvant être exécutée sur une unité de traitement du type donné subséquemment à l'exécution de la tâche donnée, un graphe descriptif de processus applicatif (CDG, CDFG).

**5.** Méthode selon la revendication 1, **caractérisée en ce que** la priorité d'une tâche pouvant être exécutée est une somme pondérée de N paramètres $p_i$, i ε {1,..,N} où N est un entier non nul, chaque paramètre $p_i$ dans la somme étant élevé à une puissance $n_i$ où $n_i$ est un entier non nul, des paramètres $p_i$ étant fournis dynamiquement par un système d'exploitation pendant l'exécution.

**6.** Méthode selon la revendication précédente, **caractérisée en ce que** des paramètres $p_i$ sont fournis statiquement avant l'exécution.

**7.** Méthode selon la revendication 1, **caractérisée en ce que** la priorité d'une tâche pouvant être exécutée dépend de priorités de processus fournies par un système d'exploitation.

**8.** Méthode selon la revendication 1, **caractérisée en ce que** la priorité d'une tâche pouvant être exécutée dépend de la charge relative de calcul des unités de traitement du type donné.

**9.** Méthode selon la revendication 1, **caractérisée en ce que** la priorité d'une tâche pouvant être exécutée dépend de la durée moyenne d'exécution sur les unités de traitement du type donné.

**10.** Méthode selon la revendication 1, **caractérisée en ce que** la priorité d'une tâche pouvant être exécutée dépend des probabilités d'exécuter les instructions conditionnelles dans la tâche donnée.

**11.** Méthode selon la revendication 2, **caractérisée en ce que** la mémoire (10) est une mémoire hiérarchique.

**12.** Méthode selon la revendication 1, **caractérisée en ce que** les configurations sont préchargées dans la hiérarchie de mémoires (10, 11, 12, 16) par blocs de bits de taille paramétrable.

**13.** Méthode selon la revendication 1, **caractérisée en ce qu'**elle est implémentée sous la forme d'un module matériel (1), le système reconfigurable étant un système sur puce.

**14.** Méthode selon la revendication précédente, **caractérisée en ce** le module matériel (1) comporte une mémoire cache (26).

**Claims**

**1.** A process for pre-loading into a hierarchy of memories (10, 11, 12, 16) bitstreams representing the configuration information of a reconfigurable system for processing information comprising several processing units of different types (2, 3, 4), a configuration describing a possible logic organisation of processing units designed for execution of a given task, the process being **characterised in that** it comprises:

- outside of execution, a step of determining tasks that can be executed in a processing unit of a type provided subsequent to execution of the given task;
- during execution of the given task, a step of calculating, for each of the tasks that can be executed, a priority dependent upon information relative to the current execution of the given task;
- during execution of the given task, a step of sorting the tasks that can be executed in their order of priority;
- during execution of the given task, a step of pre-loading into the hierarchy of memories bitstreams representing the configuration information useful for the execution of the tasks that can be performed, by giving priority to the tasks with the highest priority.

**2.** The process according to claim 1, **characterised in that** pre-loading of the configurations is interrupted upon emission of a memory loading request (10) by an operating system, said loading request being processed first so that the pre-loading process does not slow down system operation.

**3.** The process according to claim 1, **characterised in that**, for each type of processing unit, a dependency graph (TCDG) is constructed indicating the tasks that can be executed on a processing unit of the type given subsequent to execution of the given task.

**4.** The process according to the preceding claim, **characterised in that** the dependency graph (TCDG) is constructed by using, for each task that can be executed on a processing unit of the type provided subsequent to execution of the given task, an application process descriptive graph (CDG, CDFG).

**5.** The process according to claim 1, **characterised in that** the priority of a task that can be executed is a weighted sum of N parameters $p_i$, $i \, \varepsilon \, \{1,.., N\}$, where N is a non-zero integer, each parameter $p_i$ in the sum being increased to a power of $n_i$, where $n_i$ is a non-zero integer, the parameters $p_i$ being dynamically provided by an operating system during execution.

**6.** The process according to the preceding claim, **characterised in that** the parameters $p_i$ are provided statically prior to execution.

**7.** The process according to claim 1, **characterised in that** the priority of a task that can be executed depends on the priorities of the processes provided by an operating system.

**8.** The process according to claim 1, **characterised in that** the priority of a task that can be executed depends on the relative computation load of the processing units of the given type.

**9.** The process according to claim 1, **characterised in that** the priority of a task that can be executed depends on the mean execution duration on the processing units of the given type.

**10.** The process according to claim 1, **characterised in that** the priority of a task that can be executed depends on the probabilities of executing the conditional instructions in the given task.

**11.** The process according to claim 2, **characterised in that** the memory (10) is a hierarchical memory.

**12.** The process according to claim 1, **characterised in that** the configurations are pre-loaded into the hierarchy of memories (10, 11, 12, 16) by bit blocks of configurable size.

**13.** The process according to claim 1, **characterised in that** it is implemented in the form of a hardware module (1), the reconfigurable system being a chip system.

**14.** The process according to the preceding claim, **characterised in that** the hardware module (1) comprises a cache memory (26).

**Patentansprüche**

1. Verfahren zum Vorladen von Bitströmen, die die Konfigurationsinformationen eines umkonfigurierbaren Systems zum Verarbeiten von Informationen repräsentieren, die mehrere Verarbeitungseinheiten unterschiedlicher Typen (2, 3, 4) enthalten, in eine Hierarchie von Speichern (10, 11, 12, 16), wobei eine Konfiguration eine mögliche logische Organisation von Verarbeitungseinheiten beschreibt, die zum Ausführen einer gegebenen Aufgabe ausgelegt sind, wobei das Verfahren **dadurch gekennzeichnet ist, dass** es Folgendes beinhaltet:

   - außerhalb der Ausführung, einen Schritt des Ermittelns von Aufgaben, die an einer Verarbeitungseinheit eines Typs ausgeführt werden können, der nach der Ausführung der gegebenen Aufgabe gegeben wird;
   - während der Ausführung der gegebenen Aufgabe, einen Schritt des Berechnens, für jede der ausführbaren Aufgaben, einer Priorität je nach Informationen in Bezug auf die aktuelle Ausführung der gegebenen Aufgabe;
   - während der Ausführung der gegebenen Aufgabe, einen Schritt des Sortierens der ausführbaren Aufgaben in der Reihenfolge ihrer Prioritäten;
   - während der Ausführung der gegebenen Aufgabe, einen Schritt des Vorladens von Bitströmen, die die Konfigurationsinformationen repräsentieren, die für die Ausführung der ausführbaren Aufgaben nützlich sind, in die Hierarchie von Speichern, wobei die Aufgaben mit der höchsten Priorität Vorrang erhalten.

2. Verfahren nach Anspruch 1, **dadurch gekennzeichnet, dass** das Vorladen der Konfigurationen beim Aussenden einer Speicherladeanforderung (10) durch ein Betriebssystem unterbrochen wird, wobei die Ladeanforderung zuerst verarbeitet wird, so dass die Vorlademethode den Betrieb des Systems nicht verlangsamt.

3. Verfahren nach Anspruch 1, **dadurch gekennzeichnet, dass** für jeden Typ von Verarbeitungseinheit eine Abhängigkeitskurve (TCDG) erstellt wird, die die Aufgaben anzeigt, die an einer Verarbeitungseinheit des Typs ausgeführt werden können, der nach der Ausführung der gegebenen Aufgabe gegeben wird.

4. Verfahren nach einem der vorherigen Ansprüche, **dadurch gekennzeichnet, dass** die Abhängigkeitskurve (TCDG) erstellt wird, indem für jede Aufgabe, die an einer Verarbeitungseinheit des Typs ausgeführt werden kann, der nach der Ausführung der gegebenen Aufgabe gegeben wird, eine den Anwendungsprozess beschreibende Kurve (CDG, CDFG) verwendet wird.

5. Verfahren nach Anspruch 1, **dadurch gekennzeichnet, dass** die Priorität einer ausführbaren Aufgabe eine gewichtete Summe von N Parametern $p_i$, $i \in \{1,.., N\}$ ist, wobei N eine ganze Zahl ungleich null ist, wobei jeder Parameter $p_i$ in der Summe auf eine Potenz $n_i$ erhöht wird, wobei $n_i$ eine ganze Zahl ungleich null ist, wobei die Parameter $p_i$ bei der Ausführung von einem Betriebssystem dynamisch bereitgestellt werden.

6. Verfahren nach einem der vorherigen Ansprüche, **dadurch gekennzeichnet, dass** die Parameter $p_i$ vor der Ausführung statisch bereitgestellt werden.

7. Verfahren nach Anspruch 1, **dadurch gekennzeichnet, dass** die Priorität einer ausführbaren Aufgabe von den Prioritäten der Prozesse abhängig sind, die von einem Betriebssystem bereitgestellt werden.

8. Verfahren nach Anspruch 1, **dadurch gekennzeichnet, dass** die Priorität einer ausführbaren Aufgabe von der relativen Rechenlast der Verarbeitungseinheiten des gegebenen Typs abhängt.

9. Verfahren nach Anspruch 1, **dadurch gekennzeichnet, dass** die Priorität einer ausführbaren Aufgabe von der mittleren Ausführungsdauer an den Verarbeitungseinheiten des gegebenen Typs abhängig ist.

10. Verfahren nach Anspruch 1, **dadurch gekennzeichnet, dass** die Priorität einer ausführbaren Aufgabe von den Wahrscheinlichkeiten der Ausführung der konditionellen Anweisungen in der gegebenen Aufgabe abhängig ist.

11. Verfahren nach Anspruch 2, **dadurch gekennzeichnet, dass** der Speicher (10) ein hierarchischer Speicher ist.

12. Verfahren nach Anspruch 1, **dadurch gekennzeichnet, dass** die Konfigurationen nach Bitblöcken konfigurierbarer Größe in die Hierarchie von Speichern (10, 11, 12, 16) vorgeladen werden.

13. Verfahren nach Anspruch 1, **dadurch gekennzeichnet, dass** es in Form eines Hardware-Moduls (1) implementiert wird, wobei das umkonfigurerbare System ein Chipsystem ist.

14. Verfahren nach einem der vorherigen Ansprüche, **dadurch gekennzeichnet, dass** das Hardware-Module (1) einen Cache-Speicher (26) umfasst.

# FIG.1

EP 2 257 876 B1

FIG.2

FIG.3

28 ── Interface OS

Priorités de Processus    Critique / Urgent    Pause / Arrêt

IT

TCDGs ──→ Active window selection ──32

Configuration priority computation ──33

Priority Sorting ──34

Hierarchical Level choice ──35

Bitstream transfers ──30

Status_update ──31

Bus de config.    ITs

EP 2 257 876 B1

14

FIG.4

EP 2 257 876 B1

40

| 3 bits | 6 bits | 8 bits | | |
|---|---|---|---|---|
| IP_id | Thread_id | count | dependency_matrix | info_static |

| operation id | invocation id | depth | exec prob | choice prio | | loop flag |
|---|---|---|---|---|---|---|
| 10 bits | 5 bits | 5 bits | 5 bits | 5 bits | | 1 bit |

FIG.5

**FIG.6**

32 bits
ID_config

| 7 bits | 6b | 2 bits | 1 bit | 3 bits | 4 bits | 7 bits |
|---|---|---|---|---|---|---|
| transfer mode | | destination | order_next ->end_flag | order_next -> IP | order_next ->position | config size |

| 9 bits | 5 bits | 5 bits | 5 bits | 5 bits |
|---|---|---|---|---|
| dynamic prio | depth | thread_prio | exec_prob | choice_prio |

| 1 bit | 1 bit |
|---|---|
| loop flag | relevant |

**FIG.7**

| 6 bits | 10 bits | 4 bits | 10 bits | 2 bits |
|---|---|---|---|---|
| thread | operation | invocation | bitstream_id | IP |

EP 2 257 876 B1

| 7 bits | | 7 bits | | 7 bits | | 7 bits |
|---|---|---|---|---|---|---|
| begin_address_cache | | begin_block_cache | | end_address_cache | | end_block_cache |

| 7 bits | | 7 bits | | 7 bits | | 7 bits |
|---|---|---|---|---|---|---|
| begin_address_local | | begin_block_local | | end_address_local | | end_block_local |

| | 7 bits | | 7 bits | | 7 bits | | 7 bits |
|---|---|---|---|---|---|---|---|
| | total_blocks | | blocks_in_local | | blocks_in_cache | | blocks_on_IP |

| 10 bits | | 2 bits | 3 bits | 8 bits | | 5 bits | 1 b | 1 b |
|---|---|---|---|---|---|---|---|---|
| bitstream_id | | IP | config_status | ageing | | next_mutual | ch | rel |

FIG.8

| 1 bit | 1 bit | 1 bit | 1 bit | 7 bits | | 10 bits | 7 bits |
|---|---|---|---|---|---|---|---|
| busy | protection | last_block | end_of_config | next_block | | bitstream_id | block_nbr |

FIG.9

# EP 2 257 876 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20040260884 A1